# EUROPEAN PATENT SPECIFICATION

(11) **EP 3 849 232 B1**
(45) Date of publication and mention of the grant of the patent: **21.08.2024**
(21) Application number: 19858023.5
(22) Date of filing: 06.09.2019
(51) Int. Cl.: H04L 41/0654, H04L 43/0805, H04M 15/00, H04L 67/14, H04L 69/28, H04L 67/62, H04L 12/14

(54) **METHOD AND DEVICE FOR PROCESSING GX SESSION EXCEPTION**
VERFAHREN UND VORRICHTUNG ZUR VERARBEITUNG EINER GX-SITZUNGSAUSNAHME
PROCÉDÉ ET DISPOSITIF POUR LE TRAITEMENT D'UNE EXCEPTION DE SESSION GX

(30) Priority: 06.09.2018 CN 201811039100
(43) Date of publication of application: 14.07.2021
(73) Proprietor: ZTE Corporation, Shenzhen, Guangdong 518057 (CN)
(72) Inventor: WEI, Xiaopeng, Shenzhen, Guangdong 518057 (CN); SUN, Xiangxin, Shenzhen, Guangdong 518057 (CN); ZHANG, Xiuli, Shenzhen, Guangdong 518057 (CN); ZHOU, Fuxing, Shenzhen, Guangdong 518057 (CN)
(74) Representative: Novagraaf Technologies
(86) International application number: PCT/CN2019/104751
(87) International publication number: WO 2020/048532

(56) References cited:
- EP-A1- 1 931 064
- EP-A1- 2 922 317
- WO-A1-2008/055549
- CN-A- 101 730 046
- CN-A- 102 883 464
- CN-A- 103 856 968
- CN-A- 103 856 968
- CN-A- 104 301 152
- CN-A- 104 410 526
- CN-A- 106 162 758
- US-A1- 2015 055 446
- "3rd Generation Partnership Project; Technical Specification Group Core Network and Terminals; Restoration procedures (Release 15)", 3GPP STANDARD; TECHNICAL SPECIFICATION; 3GPP TS 23.007, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V15.0.0, 22 June 2018 (2018-06-22), pages 1 - 105, XP051473594

## Description

### Field of the Invention

The present disclosure relates to the field of communications, and in particular, to a method and device for processing GX session exceptions.

### Background of the Invention

In related technologies, as the long-term evolution (LTE) network becomes more and more popular, in order to make up for decline in profits from traditional voice services, messaging services and other services, it is essential to explore and carry out diversified and innovative traffic businesses. For example, an operator can open network capabilities to a third-party application provider, so that the application provider can provide targeted traffic unified payment service for specific users or services depending on its own needs. This, on the one hand, can attract users to use data services and thus expand user groups, and on the other hand, can develop a company payment mode by promoting publicity of a company. A typical application scenario is one in which a game provider provides traffic unified payment for specific users or some users and meanwhile provides QoS guarantee.

For the implementation of data services, the 3GPP specifications further define that a Sy interface is used between an application function unit (AF) and a policy and charging rules function unit (PCRF) to open the capabilities in multiple dimensions (such as bandwidth, QCI, traffic size, etc.) of data traffic to the outside, so that the AF can perform accurate control over traffic used by users. Meanwhile, it is defind that the PCRF is connected upstream to a public data network gateway (PGW) through a Gx interface, so that a policy control and charging (PCC) rule of the PCRF is provided to a policy and charging enforcement function unit (PCEF) or deleted from the PCEF, and a related event from the PCEF is transmitted to the PCRF, and that during a user's each online activity process, a Gx session is maintained between the PWG and the PCRF. During the operation of a service, a Gx session exception is caused when the Gx interface between the PCRF and the PGW or the Sy interface between the PCRF and the AF is disconnected or an equipment response timeout occurs. In a current system, when a Gx session exception occurs, the PGW directly downgrades the user and then operates according to a default rule (including a charging policy and a Qos policy) configured on the PGW and maintains this policy during the user's online process. This leads to the problem that, throughout the online process, the user cannot enjoy a preferential service and Qos guarantee that the user has subscribed to. Serious user complaints are thus produced, which restricts the progress of data services, especially backward unified payment services.

There are currently no effective solutions to the problem that in related technologies a data traffic service cannot be automatically resumed after a Gx session exception occurs.

Chinese patent CN103856968B discloses a PCC rule obtaining method and device after Gx interfaces break down. An LTE system includes a UE, a PGW and a PCRF. Fault identifications of the Gx interfaces of all the UE are defaulted as FALSE. The PGW includes a local strategy and a PCC rule. The method includes the following steps: when the Gx interfaces corresponding to the UE break down, the fault identifications of the Gx interfaces corresponding to the UE are updated to be TRUE; the PGW judges whether the UE is in an LTE attachment process or not, and if yes, the PGW obtains the local PCC rule according to the fault identifications TRUE. The PCC rule obtaining method and device are used for obtaining the PCC rule and ensuring normal access by a user under the condition that normal communication of the user is not affected when communication fails due to the fact that the PCRF or the Gx interfaces break down.

European patent application EP1931064A1 discloses methods and apparatuses for automatic restoration detection and automatic restoration of optical communication system. In the methods, a first automatic restoration lunching station sends an automatic restoration detection message to a second automatic restoration lunching station at the opposite side of a failure link; in response to receiving the automatic restoration request message, the first automatic restoration lunching station determines that the link has been repaired in two directions, and sends an automatic restoration confirmation message to the second automatic restoration lunching station; in response to receiving the automatic restoration detection message, the second automatic restoration lunching station determines that the link from the first automatic restoration lunching station to the second automatic restoration lunching station has been repaired, and sends an automatic restoration request message to the first automatic restoration lunching station; in response to receiving the automatic restoration confirmation message, the second automatic restoration lunching station determines that the link has been repaired in two directions; the two stations switching to normal working states. The safety problem that the laser leakage occurs in the failure link is solved.

### Summary of the Invention

The embodiments of the present disclosure provide a method and device for processing a Gx session exception, so as to at least solve the problem in related technologies that a data traffic service cannot be automatically resumed after a Gx session exception occurs.

According to an embodiment of the present disclosure, provided is a method, as defined in claim 1, for processing a Gx session exception, which includes: activating a preset timer when a public data network gateway (PGW) detects an exception of a Gx session, the Gx session being carried on a link between the PGW and a policy and charging rules function unit (PCRF); and resuming, after the timer expires, a data traffic service of a user equipment corresponding to the Gx session if it is determined that the link is normal.

The present disclosure further provides a method for processing a Gx session exception, which includes: detecting, by a PGW, an exception of a Gx session of a user equipment, the Gx session being carried on a link between the PGW and a PCRF; and prohibiting a data traffic service of the user equipment from degrading and continuing to process the data traffic service of the user equipment according to a policy control and charging (PCC) rule, and generating an emergency call detail record of the user equipment.

The present disclosure further provides a method for processing a Gx session exception, which includes: detecting, by a PGW, an exception of a Gx session of a user equipment, the Gx session being carried on a link between the PGW and a PCRF; retrieving, by the PGW, a most recent PCC rule for the Gx session which is recorded in a local data storage; and processing a data traffic service of the user equipment according to the most recent PCC rule.

The present disclosure further provides a method for processing a Gx session exception, which includes: detecting, by a PGW, an exception of a Gx session of a user equipment, the Gx session being carried on a link between the PGW and a PCRF; writing, if a preset condition is met, the user equipment of which the Gx session is in an exceptional state to a log file, and sending the log file to an application function unit (AF); receiving a receipt file resulted from the AF processing the log file; and processing a data traffic service of the user equipment when the receipt file indicates that a state of the user equipment is normal, and generating an emergency call detail record; or, terminating processing of a data traffic service of the user equipment when the receipt file indicates that a state of the user equipment is exceptional.

The present disclosure further provides a method for processing a Gx session exception, which includes: acquiring, by an AF, an emergency call detail record generated by a PGW if an exception of a Gx session is determined, the emergency call detail record being generated by the PGW according to a PCC rule; and performing fee deduction from a user equipment corresponding to the Gx session according to the emergency call detail record.

According to another embodiment of the present disclosure, further provided is a device, as defined in claim 7, for processing a Gx session exception, which includes: a first detection module, configured to activate a preset timer when an exception of a Gx session is detected, the Gx session being carried on a link between a PGW and a PCRF; and a first resuming module, configured to resume, after the timer expires, a data traffic service of a user equipment corresponding to the Gx session if it is determined that the link is normal.

The present disclosure further provides a device for processing a Gx session exception, which includes: a second detection module, configured to detect an exception of a Gx session of a user equipment, the Gx session being carried on a link between a PGW and a PCRF; and a first processing module, configured to prohibit a data traffic service of the user equipment from degrading and continue to process the data traffic service of the user equipment according to a PCC rule, and generate an emergency call detail record of the user equipment.

The present disclosure further provides a device for processing a Gx session exception, which includes: a third detection module, configured to detect an exception of a Gx session of a user equipment, the Gx session being carried on a link between a PGW and a PCRF; a first retrieval module, configured to retrieve a most recent PCC rule for the Gx session which is recorded in a local data storage; and a second processing module, configured to process a data traffic service of the user equipment according to the most recent PCC rule.

The present disclosure further provides a device for processing a Gx session exception, which includes: a fourth detection module, configured to detect an exception of a Gx session of a user equipment, the Gx session being carried on a link between a PGW and a PCRF; a first sending module, configured to send to an AF a log file in which the user equipment of which the Gx session is in an exceptional state is written after a preset condition is met; a first receiving module, configured to receive a receipt file resulted from the AF processing the log file; and a third processing module, configured to process a data traffic service of the user equipment when the receipt file indicates that a state of the user equipment is normal, and generate an emergency call detail record, or configured to terminate processing of a data traffic service of the user equipment when the receipt file indicates that a state of the user equipment is exceptional.

The present disclosure further provides a device for processing a Gx session exception, which includes: a first acquiring module, configured to acquire, if an exception of a Gx session is determined, an emergency call detail record generated by a PGW, the emergency call detail record being generated by the PGW according to a PCC rule; and a fee deduction module, configured to perform fee deduction from a user equipment corresponding to the Gx session according to the emergency call detail record.

According to further another embodiment of the present disclosure, further provided is a storage medium, as defined in claim 8, in which a computer program is stored. The computer program is configured to be executable to implement steps in any of the above method embodiments.

The present disclosure further provides an electronic device including a memory and a processor. A computer program is stored in the memory, and the processor is configured to execute the computer program to implement steps in any of the above method embodiments.

According to the present disclosure, when the PGW detects an exception of a Gx session, the preset timer is activated, the Gx session being carried on a link between the PGW and the PCRF; and after the timer expires, the data traffic service of user equipment corresponding to the Gx session is resumed if it is determined that the link is normal. The above technical solution solves the problem in related technologies that a data traffic service cannot be automatically resumed after a Gx session exception, and automatic resuming of the data traffic service can be implemented after the timer expires.

### Brief Description of the Drawings

The drawings described herein are provided for a further understanding of the present disclosure and constitute a part of the present disclosure. The exemplary embodiments and descriptions of the present disclosure are intended to explain the present disclosure, and do not constitute an improper limitation to the present disclosure. In the accompanying drawings:
Fig. 1 is a schematic diagram showing a location of a Gx interface in a network which leads a user to be online according to the present disclosure;
Fig. 2 is a flowchart of a method for processing a Gx session exception according to an embodiment of the present disclosure;
Fig. 3 is a flowchart showing an online process under a value-added data service according to the present disclosure;
Fig. 4 is a flowchart of an automatic resuming solution to a Gx session exception according to specific embodiment 1 of the present disclosure;
Fig. 5 is a flowchart of an emergency call detail record solution to a Gx session exception according to specific embodiment 2 of the present disclosure;
Fig. 6 is a flowchart of an emergency handling solution to a Gx session exception according to a system embodiment of the present disclosure;
Fig. 7 is a flowchart of an AF processing an emergency call detail record of a user having an exceptional session according to specific embodiment 3 of the present disclosure; and
Fig. 8 is a flowchart showing a PGW regularly synchronizing a session exceptional state file and a receipt being returned according to specific embodiment 4 of the present disclosure.

### Detailed Description of the Embodiments

The present disclosure will be described in detail below with reference to the drawings and in conjunction with the embodiments. It should be noted that the embodiments in the present disclosure and the features in these embodiments can be combined with one another as so long as there is no conflict.

It should be noted that terms "first", "second" and the like as used in the description and claims of the present disclosure and in the above-mentioned drawings are used to distinguish similar objects, and are not used to describe a particular order or indicate an order of priority.

### Embodiment 1

An embodiment of the present disclosure provides a mobile communication network (including but not limited to an LTE network, or a 5G mobile communication network). Network architecture of the network may include network-side equipment (such as a base station) and a terminal. In this embodiment, provided is an information transmission method that is executable on the foregoing network architecture. It should be noted that operating environments of the foregoing information transmission method provided in this embodiment of the present disclosure are not limited to the foregoing network architecture.

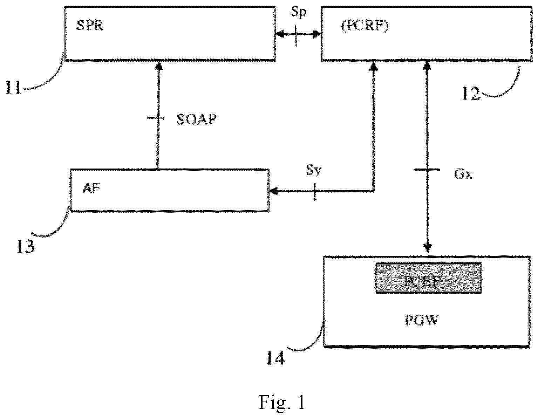

Fig. 1 is a schematic diagram showing a location of a Gx interface in a network which leads a user to be online according to the present disclosure. As shown in Fig. 1, a scenario of the network includes a subscription profile repository (SPR) 11, an application function unit (AF) 13, a policy and charging rules function unit (PCRF) 12, a policy and charging enforcement function unit (PCEF), and a public data network gateway (PGW).

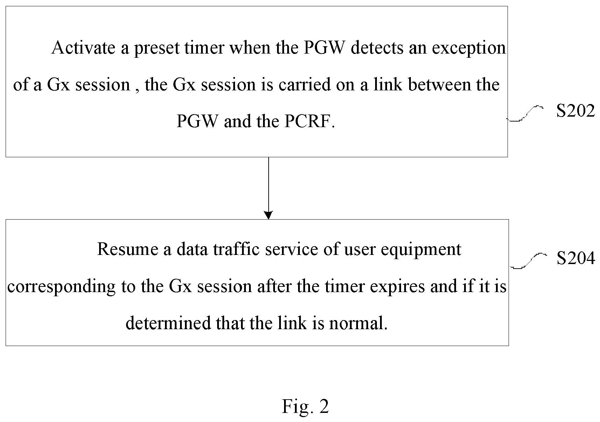

In this embodiment, provided is a method for processing a Gx session exception that is executable on the above network architecture. Fig. 2 is a flowchart of the method for processing a Gx session exception according to this embodiment of the present disclosure. As shown in Fig. 2, the method includes the following steps.

In step S202, when the PGW detects a Gx session exception, a preset timer is activated. The Gx session is carried on a link between the PGW and the PCRF.

In step S204, after the timer expires a data traffic service of a UE (user equipment) corresponding to the Gx session is resumed if it is determined that the link is normal.

In the above steps, when the PGW detects the Gx session exception, the preset timer is activated, the Gx session being carried on the link between the PGW and the PCRF; and after the timer expires, the data traffic service of the user equipment corresponding to the Gx session is resumed if it is determined that the link is normal. In this way, the problem in related technologies that a data traffic service cannot be automatically resumed after a Gx session exception can be solved, and automatic resuming of the data traffic service is enabled after the timer expires.

Gx is an interface protocol between a network of the PCEF and a network of the PCRF. In related technologies, interfaces similar to a Gx interface include Gy, Gz, Sy, Sx, Sz, etc.

The data traffic service in the present disclosure may include a value-added data service.

Alternatively, when the PGW detects the Gx session exception, the method further includes that, before the timer expires, the data traffic service of the user equipment is prohibited from degrading and is continued to be processed according to a policy control and charging (PCC) rule, and an emergency call detail record of the user equipment is generated.

The aforementioned PCC rule may be a fee package in related technologies. After the emergency call detail record of the user equipment is generated, the emergency call detail record may be transmitted to the AF for being processed.

Alternatively, after the timer expires, the method includes the following steps.

If it is determined that the link between the PGW and the PCRF is normal, the data traffic service of the user equipment corresponding to the Gx session is resumed.

Or, if it is determined that the link between the PGW and the PCRF is exceptional, the data traffic service of the user equipment is continued to be processed according to the PCC rule, and an emergency call detail record of the user equipment is generated.

Alternatively, when the PGW detects the Gx session exception, the method includes that, before the timer expires, the PGW retrieves a most recent PCC rule for the Gx session recorded in a local data storage, and processes the data traffic service of the user equipment corresponding to the Gx session according to the most recent PCC rule.

Alternatively, after the timer expires, the method includes the following steps.

If it is determined that the link between the PGW and the PCRF is normal, the data traffic service of the user equipment corresponding to the Gx session is resumed.

Or, if it is determined that the link between the PGW and the PCRF is exceptional, the data traffic service of the user equipment corresponding to the Gx session is processed according to the most recent PCC rule.

Alternatively, after the PGW retrieves the most recent PCC rule for the Gx session recorded in the local data storage, the method includes the following steps.

After it is determined that the user equipment has consumed all data traffic, the PGW reports a credit control request (CCR) message to the AF through the PCRF according to the PCC rule.

If a normal response returned by the PCRF is received, the data traffic service corresponding to the Gx session is resumed, and the normal response may carry a traffic slice.

Or, if a timeout error code or an AF timeout error code returned by the PCRF is received, the data traffic service is continued to be processed according to the PCC rule, and an emergency call detail record is generated.

Alternatively, when the PGW detects the Gx session exception, the method further includes that, before the timer expires, and if a preset condition is met, the PGW writes the user equipment of which the Gx session is in an exceptional state to a log file, and sends the log file to the AF. Then, the PGW receives a receipt file resulted from the AF processing the log file. and processes the data traffic service of the user equipment and generates an emergency call detail record; or terminates processing of the data traffic service of the user equipment when the receipt file indicates that a state of the user equipment is exceptional.

Alternatively, after the timer expires, the method includes the following steps.

If it is determined that the link between the PGW and the PCRF is normal, the data traffic service of the user equipment corresponding to the Gx session is resumed.

Or, if it is determined that the link between the PGW and the PCRF is exceptional, the PGW writes the user equipment of which the Gx session is in an exceptional state to a log file.

Alternatively, the preset condition includes at least one of the following: a preset time is exceeded; and a number of times of the Gx session request being exceptional exceeds a threshold.

Alternatively, after terminating the processing of the data traffic service of the user equipment when the receipt file indicates that the state of the user equipment is exceptional, the PGW receives a message about the user equipment applying for traffic, and the PGW determines that a basic charging rule is set as a charging rule for the user equipment. The basic charging rule may be non-package charging, namely, general charging provided by an operator.

Alternatively, the PGW detects the Gx session exception by at least one of the following ways: a request for the Gx session times out; and a message fed back by the PCRF and indicating that an AF times out is received.

According to another embodiment of the present disclosure, provided is a method for processing a Gx session exception, which includes the following steps.

In step 1, a PGW detects a Gx session exception of a UE (user equipment). The Gx session is carried on a link between a PGW and a PCRF.

In step 2, a data traffic service of the user equipment is prohibited from degrading; the data traffic service of the user equipment is continued to be processed according to a PCC rule, and an emergency call detail record of the user equipment is generated.

By using these above, when the Gx session exception occurs, the emergency call detail record is generated to ensure that a value-added data service is provided for the user equipment, which reduces user expenditure and improves user experience.

According to another embodiment of the present disclosure, provided is a method for processing a Gx session exception, which includes the following steps.

In step 1, a PGW detects a Gx session exception of a UE (user equipment). The Gx session is carried on a link between a PGW and a PCRF.

In step 2, the PGW retrieves a most recent PCC rule for the Gx session recorded in a local data storage.

In step 3, a data traffic service of the user equipment is processed according to the most recent PCC rule.

By using these above, when the Gx session exception occurs, the PCC rule most recently used by the user equipment is used for charging, so that a value-added traffic service is continuously provided for the user. This avoids additional expenditure of the user.

Alternatively, after the PGW retrieves the most recent PCC rule for the Gx session recorded in the local data storage, the method includes the following steps.

After it is determined that the user equipment has consumed all data traffic, the PGW reports a credit control request (CCR) message to an AF through the PCRF according to the PCC rule.

If a normal response returned by the PCRF is received, the data traffic service corresponding to the Gx session is resumed.

Or, if a timeout error code or an AF timeout error code returned by the PCRF is received, the data traffic service is continued to be processed according to the PCC rule, and an emergency call detail record is generated.

According to another embodiment of the present disclosure, provided is a method for processing a Gx session exception, which includes the following steps.

In step 1, a PGW detects a Gx session exception of a UE (user equipment). The Gx session is carried on a link between a PGW and a PCRF.

In step 2, if a preset condition is met, the PGW writes the user equipment on which the Gx session is in an exceptional state to a log file, and sends the log file to an AF.

In step 3, a receipt file resulted from the AF processing the log file is received.

In step 4, when the receipt file indicates that a state of the user equipment is normal, the data traffic service of the user equipment is processed, and an emergency call detail record is generated; or, when the receipt file indicates that a state of the user equipment is exceptional, processing of the data traffic service of the user equipment is terminated.

By using these above, the PGW can exchange information with the AF in a timely manner to obtain a latest state of the user equipment and determine a fee deduction method based on the state of the user equipment. This avoids the problem that the PGW employs an emergency handling approach for a long time but cannot deduct fees from the user.

Alternatively, the preset condition includes at least one of the following: a preset time is exceeded; and a number of times of the Gx session request being exceptional exceeds a threshold.

Alternatively, after terminating the processing of the data traffic service of the user equipment when the receipt file indicates that the state of the user equipment is exceptional, the method includes that the PGW receives a message about the user equipment applying for traffic, and the PGW determines that a basic charging rule is set as a charging rule for the user equipment.

According to another embodiment of the present disclosure, provided is a method for processing a Gx session exception, which includes the following steps.

In step 1, when a Gx session exception is determined, an AF acquires an emergency call detail record generated by a PGW The emergency call detail record is generated by the PGW according to a PCC rule.

In step 2, fee deduction from the user equipment corresponding to the Gx session is performed according to the emergency call detail record.

By using these above, when the Gx session exception occurs, it is realized that the PGW is providing an emergency service, at the same time, the AF is performing fee deduction according to the emergency call detail record.

Alternatively, when the Gx session exception is determined, the method further includes that the AF receives a log file sent by the PGW, the log file keeping a record of the user equipment of which the Gx session is in an exceptional state. Then, the AF confirms a condition of a data traffic package of the user equipment, and marks the condition as a normal condition when it is confirmed that there is remaining traffic package of the user equipment, or marks the condition as an exceptional condition when it is confirmed that there is no remaining traffic package of the user equipment. The AF then writes the condition of the data traffic package into a receipt file and sends the receipt file to the PGW.

A description will be given below in conjunction with another embodiment of the present disclosure.

The present disclosure proposes a method and a system to ensure automatic resuming of a data service capability when a Gx session exception occurs. This disclosure proposes several solutions as below. When a Gx session exception occurs, the exceptional session is monitored in a regular manner to ensure that, after the Gx session recovers from the exceptional state, a rule issued by an AF may be executed immediately after a PCRF is resumed, so that a user's data service can be restored to normal use as soon as possible. Using this solution of the present disclosure, even if the Gx session cannot recover from the exceptional state for a short period of time, the user can still be enabled to operate according to a charging rule issued by the PCRF, and a later supplementary fee can be deducted according to a call detail record of the user whose Gx session is exceptional. This decreases complaints from users about charging errors caused by system problems. The above solutions may be used in combination or alone. The method and the system of the present disclosure is used to solve the current problem that a value-added data services, especially a unified payment service (e.g., a service as an event gift or a service provided by a third-party platform) cannot be automatically resumed after the aforementioned Gx session exception.

In order to solve the problems in the existing technologies, the present disclosure aims to solve the problem that a data service cannot be automatically restored when a Gx session exception occurs, so that user charging errors caused thereby can be solved accordingly. Provided are a method and a system for automatic resuming of a data service when a Gx session exception occurs. Specifically provided are four implementing solutions which may be used alone or in combination.

Solution 1: an automatic resuming solution to a Gx session exception.

Solution 2: an emergency call detail record solution to a Gx session exception.

Solution 3: an emergency handling solution to a Gx session exception.

Solution 4: a user traffic overdraft prevention solution to a Gx session exception.

These solutions include the following contents.

In the above-mentioned automatic resuming solution to a Gx session exception, when a timeout exception of a certain session request of the PGW occurs or an AF timeout exception is fed back by the PCRF, the PGW activates a timer to monitor the session. After the timer expires, the PGW detects whether a link to the PCRF is normal or not. If the link is normal, a data traffic service is resumed by enabling a user to go online again.

The emergency call detail record solution to a Gx session exception is an extension of solution 1 to provide a better service. When a timeout exception of a certain session request of the PGW occurs or an AF timeout exception is fed back by the PCRF, the PGW activates a timer to monitor the session. While the session is monitored, the service is not degraded, instead a charging policy for the value-added data service is continued to be maintained and an emergency call detail record is generated. Then the AF collects the emergency call detail record for a supplementary fee deduction.

In the emergency handling solution to a Gx session exception, when a timeout exception of a certain session request of the PGW occurs or an AF timeout exception is fed back by the PCRF, the PGW activates an emergency process. The emergency process adopts a most recent PCC rule for the user recorded in a local data storage. After the user consumes issued traffic during use of the network, the PGW continues to report a CCR message to the AF through the PCRF according to the PCC rule. If the PCRF normally returns a relevant response, a normal interaction with the PCRF is restored. If the PCRF continues to return an error code indicating a timeout or an AF timeout, the PGW generates an emergency call detail record. The AF actively collects and generates the emergency call detail record in a regular manner, and performs supplementary fee deduction for online traffic consumed during the automatic emergency solution.

In the user traffic overdraft prevention solution to a Gx session exception, while handling a Gx session exception, the PGW writes, in a regular manner, a user with the exceptional session into a file which is then acquired and processed by the AF. The AF processes the user in the exceptional session file. The AF queries the user's traffic package and the remaining traffic. If the user has a purchased package and there is remaining traffic, a state of the user is marked as normal. If the user has not subscribed to a corresponding data traffic service, a data service identification of the user is deleted through an SPR, and the state of the user is marked as exceptional. User data and the state of the user are written to a receipt file. The PGW obtains the receipt file for processing. If the state of the user is normal, the current emergency processing is maintained. If the state of the user is exceptional, processing of the emergency call detail record of the user is terminated. When the user applies for a traffic slice later, a basic charging rule is directly used and there is no need to apply with the PCRF for the traffic slice. This avoids the problem that the PGW employs an emergency handling approach for a long time but cannot deduct fees from the user.

The present disclosure adopts the following technical solutions, and the following network elements are involved in the solutions of the present disclosure to deal with Gx session exceptions.

Application function unit (AF): An AF is a core node that implements a value-added data service of data traffic. Connected between an AF and a PCRF is a Sy interface so that capabilities in multiple dimensions (such as bandwidth, QCI, traffic size, etc.) of data traffic can be opened to the outside and controlled. The AF can accurately control traffic used by a user, and realize value-added data services of various data traffic.

Subscription profile repository (SPR): An SPR contains information related to all subscribers or subscriptions. The PCRF uses such information to determine subscription-based policies and IP-CAN bearer-level PCC rules.

Policy and charging rules function module (PCRF): A PCRF has a policy control decision-making capability and a flow-based charging control function, and a function of providing service data flow detection, gating, quality-of-service (QoS)-based and flow-charging (except credit control)-based network control to a policy and charging enforcement function unit (PCEF). The PCRF can, with multiple dimensions such as service, user, location, cumulative usage quantity, access type, time and so on as a trigger condition, generate a control rule and issue the control rule to the PCEF for execution. The PCRF can receive service information from the AF and decide a control rule for the service, and can also notify the AF when a specific event is triggered. The PCRF cooperates with the SPR to support synchronization of a user's subscription and service subscription information from the AF, and to formulate policies in conjunction with the user information from the AF.

PGW module (PDN (Public Data Network) gateway) is an important network element in a mobile communication network EPC. The EPC network is actually an evolved version of PS domain of the original 3G core network, and the PGW is also equivalent to an evolved GGSN network element. The function and role of the PGW are equivalent to those of the original GGSN network element. As a border gateway of the EPC network, the PGW provides user session management and bearer control, data forwarding, IP address allocation, and non-3GPP user access. The PGW is an anchor point for 3GPP access and non-3GPP access to the PDN. The so-called 3GPP access refers to a wireless access technology from the 3GPP standard family. For example, currently in China mobile phones using China Mobile and China Unicom adopt the 3GPP access technology. The so-called non-3GPP access refers to wireless access technologies beyond the 3GPP standard family. Typical examples are China Telecom's CDMA access technology and the currently popular WiFi access technology. In other words, in the EPC network, if a mobile terminal uses non-3GPP access, it may not pass a MME network element and a SGW network element, but it must pass the PGW network element before access to the PDN.

The following is a further description in conjunction with the specific embodiments of the present disclosure

In order to make the above methods, features, and advantages of the present disclosure clearer and easier to be discovered, embodiments based on the technical solutions of the present disclosure are now described in further detail with reference to the accompanying drawings.

Examples of various processing modules and various devices involved in a system capable of implementing automatic resuming and automatic emergency process when a Gx session exception occurs may be found in Fig. 1. As shown in Fig. 1, a location of a Gx interface in the network is indicated. The Gx interface is an interface protocol located between a PCRF 12 and a PGW 14. A PCEF (usually co-located with the PGW) is configured to detect a service data flow, and acquire and execute a service-based control and charging policy from the PCRF. Reference numeral 11 represents a SPR. The SPR stores a user account number sent by the AF 13. The SPR timely subscribes the user with the PGW, so that the PGW later can send a message about the user's online traffic application to the PCRF side through a Gx session. The PCRF, by interacting with the AF through a Sy interface, can formulate a control and charging policy based on the user's service characteristics and user attributes, and dynamically issue a control and charging policy to the PCEF.

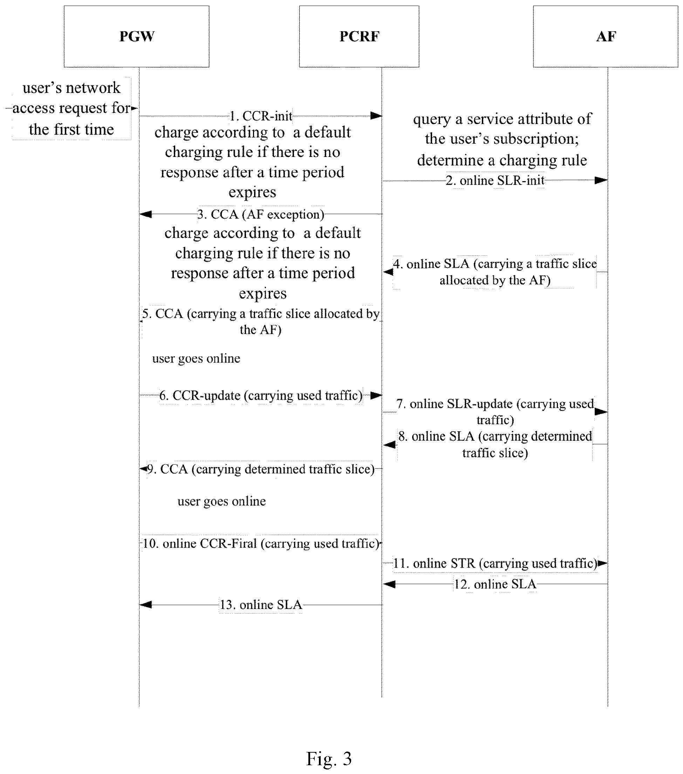

Fig. 3 is a flowchart showing an online process under a value-added data service according to the present disclosure. As shown in Fig. 3, steps of the online process under the value-added data service are clearly indicated. As shown in Fig. 3, the process includes the following steps.

In step 1, the PGW sends a CCR-init (credit control request- initial) to the PCRF. When a user sends a network access request for the first time, the PGW sends a request to the PCRF for the user's charging policy. If there is no response after a timeout period expires, a default charging rule is used for charging.

In step 2, the PCRF sends an online SLR-init (spending limit request-initial) to the AF, i.e., the PGW and the AF query a service attribute of the user's subscription and determine a charging rule.

In step 3, if the AF being exceptional is returned to the PGW through a CCA, then the PGW uses the default charging rule throughout the user's online period.

In step 4, if the AF is normal, a traffic slice is sent to the PCRF through an online SLA (service level agreement).

In step 5, the PCRF sends the traffic slice to the PGW by carrying the traffic slice in a CCA.

In step 6, the PGW sends to the PCRF a CCR-update which carries traffic that has been used.

In step 7, the PCRF sends to the AF an online SLR-update which carries the traffic that has been used.

In step 8, the AF returns to the PCRF an online SLA which carries a determined traffic slice.

In step 9, the PCRF feeds back to the PGW a CCA which carries the determined traffic slice.

In step 10, the user goes online, and the PGW uploads to the PCRF an online CCR-Firal which carries the traffic that has been used.

In step 11, the PCRF transmits to the AF an online STR which carries the traffic that has been used.

In step 12, the AF feeds back an online SLA to the PCRF.

In step 13, the PCRF feeds back the online SLA to the PGW.

As can be seen from the flowchart, only when the user sends a network access request for the first time, does the PGW sends a request to the PCRF for the user's charging policy. If the PCRF times out or the PCRF returns that the AF is exceptional, then the PGW adopts a default charging rule throughout the user's online period. Rather, only when the PCRF returns that the AF is normal in response to a network access request sent for the first time and further attaches a specified traffic slice, does the PGW charges according to a specified PCC rule.

### Specific Embodiment 1:

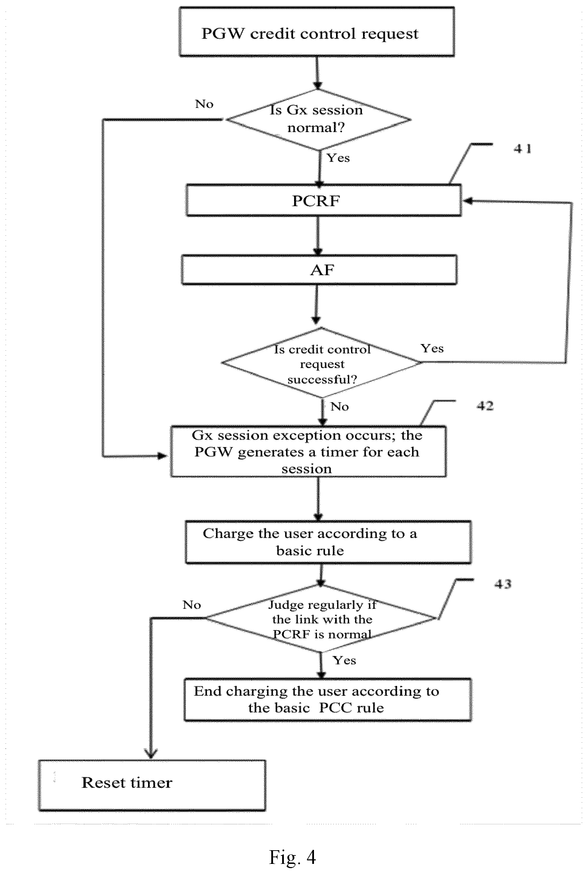

Fig. 4 is a flowchart of an automatic resuming solution to a Gx session exception according to specific embodiment 1 of the present disclosure. As shown in Fig. 4, it shows a processing flowchart of an embodiment of a monitoring scheme in which a basic charging rule is used for a user to deal with a Gx session exception.

In step 41, upon the user's initial attachment to a network, the PGW sends a CCR (credit control request) to the PCRF to request a charging policy and apply for a traffic slice, and the PCRF forwards the request (through a Sy session function) to the AF. During this process, a PCRF fault or an AF fault or a network exception will cause a Gx session exception between the PGW and the PCRF.

In step 42, the PGW activates a timer for a session exception, downgrades the user (equivalent to degrading the user's data traffic service) and uses a configured basic PCC rule for charging, and processes a timer event after the session timer expires and judges a state of a link with the PCRF.

In step 43, when the PGW judges that the state of the link is exceptional (including also the processing of the timer event after the session timer expires in step 42), the PGW continues to maintain an original processing scheme used to deal with the Gx exceptional session. If the link is normal, the PGW enables the user to go offline and then go online again so that a normal process is continued and a normal interaction with the PCRF is restored.

A change that is made to achieve this solution is that when the Gx session exception occurs, the PGW needs to activate a timing device and try again to connect with the PCRF and the AF after a specified time has passed, so as to timely resume a value-added data service that the user has subscribed to.

Using the above solution, it is required that a timer be activated after the Gx session exception is detected, and that after the timer expires, the user be enabled to passively go offline and then go online again so the data service can be restored to a normal state. Of course, there still is a problem that in a time period before the timer expires, the user cannot normally enjoy the preferential value-added data service, and feed deduction is performed according to a basic charging rule, which may still cause complaints from sensitive users.

### Specific Embodiment 2:

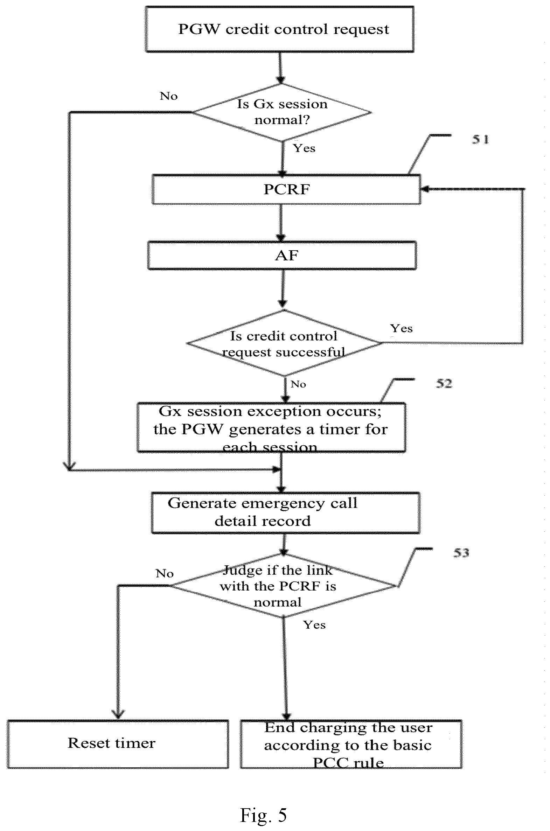

Fig. 5 is a flowchart of an emergency call detail record solution to a Gx session exception according to specific embodiment 2 of the present disclosure. As shown in Fig. 5, the solution includes the following steps.

In step 51, upon the user's initial or indirect attachment to the network, the PGW sends a CCR (it should be complementally noted that the CCR may be used to authenticate the user) to the PCRF to request a charging policy or apply for a traffic slice, and the PCRF forwards the request to the AF. During this process, a PCRF fault or an AF fault will cause a Gx session exception between the PGW and the PCRF.

In step 52, the PGW activates a timer in the case of a session exception but does not downgrade the user; instead, the PGW activates an automatic emergency call detail record mode to generate an emergency call detail record, and judges a state of the link with the PCRF.

In step 53, when the PGW judges that the state of the link is exceptional, the PGW continues to maintain an original processing scheme used to deal with the Gx exceptional session. If the link is normal, the PGW enables the user to go offline and then go online again so that a normal process is continued and a normal interaction with the PCRF is restored. At the same time, the AF actively processes the emergency call detail record in a regular manner, and performs deduction of traffic generated during the automatic emergency mode.

To adopt the above technical solution, it is necessary to make changes to both the PGW and the AF. Changes to the PGW include that when the Gx session exception occurs, a timing device needs to be activated; after a specified time period, the PGW tries again to connect with the PCRF and the AF to timely resume a value-added data service that the user has subscribed to. Furthermore, during the activation of the timing device, the PGW does not charge traffic consumed by the user according to a basic PCC rule, but generates an emergency call detail record for the value-added data service. The AF needs to be provided with an additional function of scanning and processing the emergency call detail record from the PGW. Changes to the AF are relatively small.

Using the above solution, it can be ensured that, throughout the time period of the Gx session exception, the user can normally enjoy services and benefits of the value-added data service. User complaints thus will not be caused. In the case of a Gx session exception caused by an AF exception or a PCRF exception, to generate a specific emergency call detail record necessitates a great change in the PGW. In addition, in extreme cases, it may cause overdraft of the value-added data service by the user.

### Specific Embodiment 3:

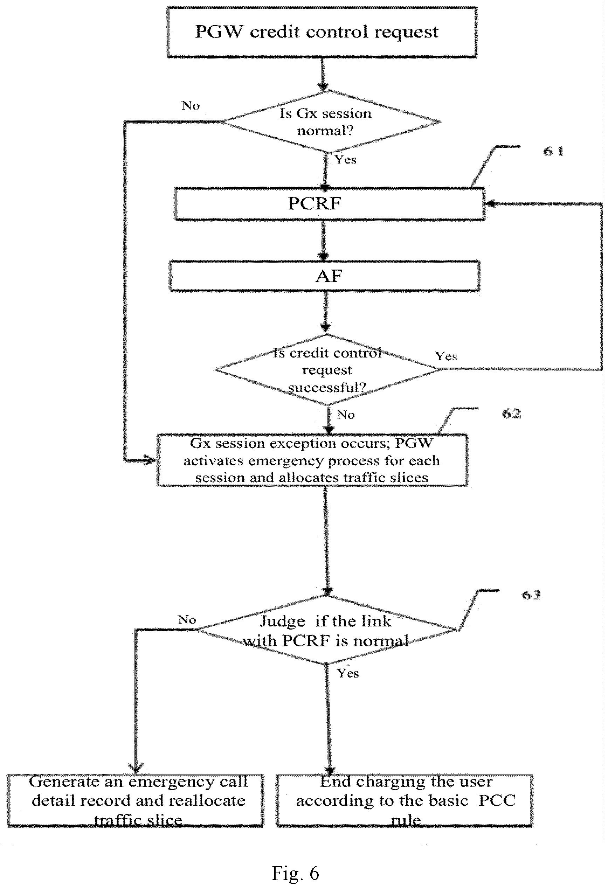

Fig. 6 is a flowchart of an emergency handling solution to a Gx session exception according to a system embodiment of the present disclosure. As shown in Fig. 6, the solution includes the following steps.

In step 61, upon the user's initial or indirect attachment to the network, the PGW sends a CCR to the PCRF to request a charging policy or apply for a traffic slice, and the PCRF forwards the request to the AF. During this process, a PCRF fault or an AF fault will cause a Gx session exception between the PGW and the PCRF.

In step 62, the PGW controls an exceptional session to enter an emergency process. During the emergency process, the PGW allocates a new traffic slice according to a PCC rule last saved by the user so as to allow the user to continue using the network, and judges a state of the link with the PCRF.

In step 63, when it is judged that the state of the link is exceptional, an original processing scheme to deal with the Gx exceptional session is continued to be maintained. If the link is normal, the CCR is continuously sent to the PCRF so as to restore a normal interaction with the PCRF. After the PCRF returns a response normally, the PGW terminates the local emergency process for the Gx exceptional session, and ends emergency process charging.

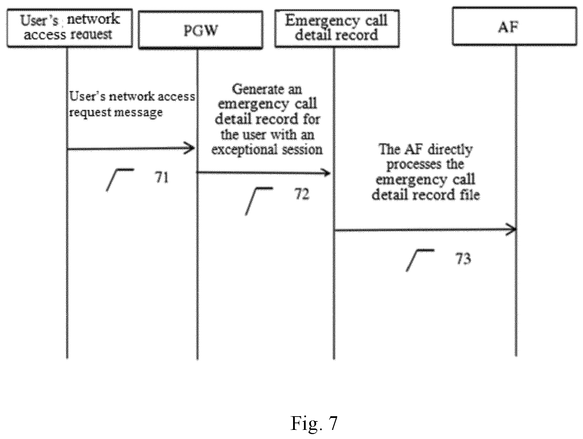

Fig. 7 is a flowchart of the AF processing an emergency call detail record of a user with an exceptional session according to specific embodiment 3 of the present disclosure. As shown in Fig. 7, the following steps are included.

In step 71, the user sends a network access request message to the PGW.

In step 72, when either timing of the PGW or a number of times of the Gx session request being exceptional meets a threshold, a formal emergency call detail record file is automatically generated.

In step 73, the AF actively or passively acquires the call detail record file from the PGW to perform fee deduction. This deduction method reduces a deduction signaling pressure between the PGW and the PCRF and the complexity of processing by the PGW.

To adopt the above solution, it is necessary to make changes to both the PGW and the AF. Changes to the PGW include that when the Gx session exception occurs, the PGW activates an emergency process according to a PCC rule returned by the PCRF or a locally configured default rule. When the user's consumed traffic reaches a quota of a traffic slice, the PGW continues to report a CCR-update message to the AF through the PCRF. After the exceptional PCRF or the exceptional AF returns to normal, a value-added data service that the user has subscribed to is resumed as soon as possible, and an emergency call detail record of the value-added data service is generated with respect to a CCR message to which a response is not returned in time. The AF needs to be provided with an additional function of scanning and processing the emergency call detail record from the PGW. Changes to the AF are relatively small.

In the above-mentioned solution, changes to the PGW is not that much, and it can be guaranteed that, throughout the time period of the Gx session exception, the user can normally enjoy services and benefits of the value-added data service. User complaints thus will not be caused. In addition, in extreme cases, it may cause overdraft of the value-added data service by the user.

### Specific Embodiment 4:

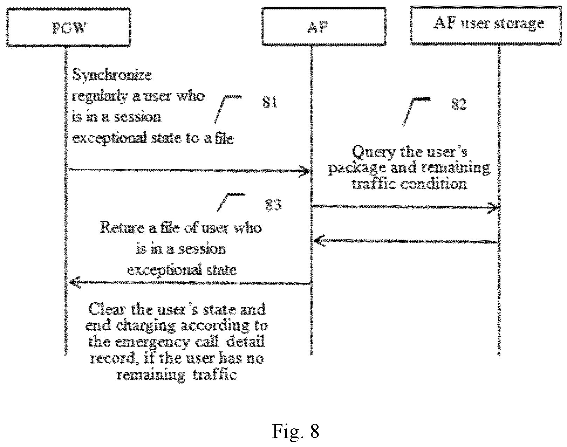

Fig. 8 is a flowchart of the PGW regularly synchronizing a session exceptional state file and a receipt being returned according to specific embodiment 4 of the present disclosure. As shown in Fig. 8, the following steps are included.

In step 81, the PGW writes the user who is in a session exceptional state to a log file. The session exceptional state file is actively or passively acquired and processed by the AF.

In step 82, the AF deals with the user in the session exceptional state file. The AF queries the user's package and remaining traffic condition. If the user has a purchased package and there is remaining traffic, a state of the user is marked as normal. If the user does not have a purchased package or there is no remaining traffic, the state of the user is marked as exceptional, and user data and the state of the user are written to a receipt file.

In step 83, the PGW acquires the receipt file for processing. If the state of the user is normal, the current emergency processing is maintained. If the state of the user is exceptional, processing of the user's emergency call detail record is terminated and a state regarding the user's traffic value-added packet is deleted. When the user later applies for a traffic slice, a basic package is directly used and it is no longer necessary to apply for the traffic slice with the PCRF, which avoids the problem that the PGW uses the emergency handling mode for a long time but cannot charge the user.

In the above solution, in addition to those changes to the PGW and the AF in specific embodiment 1, specific embodiment 2 or specific embodiment 3, the PGW writes user information to one log file according to the situation of the session exception, scans the receipt file returned by the AF in a regular manner, and modifies the user's charging rule stored locally according to the receipt file. The AF needs to be provided with additional functions of scanning and processing the log file from the PGW, judging whether account information of the user's value-added data service is normal or not based on exceptional user queries, and writing a judgment result into a relevant receipt file.

The above solution can reduce the probability of overdraft of the user's value-added data service account. Of course, changes to the PGW and the AF are relatively much.

It should be noted that for the sake of simple description, the above embodiments are all expressed as a series of action combinations. Those skilled in the art however should appreciate that the present disclosure is not limited by the described orders of the actions because according to the present disclosure some of the steps can be performed in other orders or performed simultaneously.

With the description of the above embodiments, those skilled in the art can clearly understand that the methods according to the above embodiments can be implemented by means of software plus necessary general hardware platforms, and of course can also be implemented by hardware, but in many cases be implemented preferably by the means of the former. Based on such understanding, the technical solutions of the present disclosure in their essence or to put it another way the part of the technical solutions of the present disclosure that contributes to the existing technologies can be embodied in the form of a software product. Such a computer software product is stored in a storage medium (such as a ROM/RAM, a magnetic disk, an optical disc) and includes a plurality of instructions to allow a terminal device (which can be a mobile phone, a computer, a server, or a network device, etc.) to execute the methods described in the various embodiments of the present disclosure.

### Embodiment 2

In this embodiment, a device for processing a Gx session exception is provided. The device is configured to implement the above-mentioned embodiments and preferred implementations. What has been described above will not be repeated herein. As used below, the term "module" may implement a combination of software and/or hardware with predetermined functions. Although the device described in the following embodiment is preferably implemented by software, it is also possible and conceivable that the device many be implemented by hardware, or a combination of software and hardware.

According to another embodiment of the present disclosure, a device for processing a Gx session exception is provided. The device includes a first detection module and a first resuming module.

The first detection module is configured to activate a preset timer when an exceptional Gx session is detected. The Gx session is carried on a link between a PGW and a PCRF.

The first resuming module is configured to resume, after the timer expires, a data traffic service of a UE (user equipment) corresponding to the Gx session if it is determined that the link is normal.

Using the above solution, when the PGW detects a Gx session exception, the preset timer is activated, the Gx session being carried on a link between the PGW and the PCRF. After the timer expires, the data traffic service of the user equipment corresponding to the Gx session is resumed if it is determined that the link is normal. In this way, the problem in related technologies that the data traffic service cannot be automatically resumed after a Gx session exception is solved, and automatic resuming of data traffic service is implemented after the timer expires.

Alternatively, when the PGW detects the exceptional Gx session, the device further includes steps of: prohibiting the data traffic service of the user equipment from degrading before the timer expires; and continuing to process the data traffic service of the user equipment according to a PCC rule and generating an emergency call detail record of the user equipment.

The aforementioned PCC rule may be a fee package in related technologies. After the emergency call detail record of the user equipment is generated, the emergency call detail record may be transmitted to the AF for being processed.

Alternatively, after the timer expires, the following steps are included.

If it is determined that the link between the PGW and the PCRF is normal, the data traffic service of the user equipment corresponding to the Gx session is resumed.

Or, if it is determined that the link between the PGW and the PCRF is exceptional, the data traffic service of the user equipment is continued to be processed according to the PCC rule and an emergency call detail record of the user equipment is generated.

Alternatively, when the PGW detects a Gx session exception, the following steps are included: retrieving, by the PGW, before the timer expires, a most recent PCC rule for the Gx session which is recorded in a local data storage; and processing the data traffic service of the user equipment corresponding to the Gx session according to the most recent PCC rule

Alternatively, after the timer expires, the following steps are included.

If it is determined that the link between the PGW and the PCRF is normal, the data traffic service of the user equipment corresponding to the Gx session is resumed.

Or, if it is determined that the link between the PGW and the PCRF is exceptional, the data traffic service of the user equipment corresponding to the Gx session is processed according to the most recent PCC rule.

Alternatively, after the PGW retrieves the most recent PCC rule for the Gx session which is recorded in the local data storage, the following steps are included.

After it is determined that the user equipment has consumed all data traffic, the PGW reports a CCR message to the AF through the PCRF according to the PCC rule.

If a normal response returned by the PCRF is received, the data traffic service corresponding to the Gx session is resumed, and the normal response may carry a traffic slice.

Or, if a timeout error code or an AF timeout error code returned by the PCRF is received, the data traffic service is continued to be processed according to the PCC rule, and an emergency call detail record is generated.

Alternatively, when the PGW detects the Gx session exception, the device further includes steps of: before the timer expires, writing by the PGW, the user equipment of which the Gx session is in an exceptional state to a log file and sending the log file to the AF if a preset condition is met; receiving a receipt file resulted from the AF processing the log file; processing the data traffic service of the user equipment when the receipt file indicates that a state of the user equipment is normal, and generating an emergency call detail record; or, terminating processing of the data traffic service of the user equipment when the receipt file indicates that a state of the user equipment is exceptional.

Alternatively, after the timer expires, the following steps are included.

If it is determined that the link between the PGW and the PCRF is normal, the data traffic service of the user equipment corresponding to the Gx session is resumed.

Or, if it is determined that the link between the PGW and the PCRF is abnormal, the PGW writes the user equipment of which the Gx session is in an exceptional state to a log file.

Alternatively, the preset condition includes at least one of the following: a preset time is exceeded; and a number of times of the Gx session request being exceptional exceeds a threshold.

Alternatively, after terminating the processing of the data traffic service of the user equipment when the receipt file indicates that the state of the user equipment is exceptional, the PGW receives a message about the user equipment applying for traffic, and the PGW determines that a basic charging rule is set as a charging rule for the user equipment. The basic charging rule may be non-package charging, namely, general charging provided by an operator.

Alternatively, the PGW detects a Gx session exception by at least one of the following ways: a Gx session request times out; and a message fed back by the PCRF and indicating that the AF times out is received.

According to another embodiment of the present disclosure, a device for processing a Gx session exception is also provided. The device includes a second detection module and a first processing module.

The second detection module is configured to detect an exceptional Gx session of a UE (user equipment). The Gx session is carried on a link between a PGW and a PCRF.

The first processing module is configured to prohibit a data traffic service of the user equipment from degrading, continue to process a data traffic service of the user equipment according to a PCC rule, and generate an emergency call detail record of the user equipment.

By using these above, when a Gx session exception occurs, the emergency call detail record is generated to ensure that the user equipment is still provided with its value-added data service, which reduces user expenditure and improves user experience.

According to another embodiment of the present disclosure, a device for processing a Gx session exceptions is also provided. The device includes a third detection module, a first retrieval module, and a second processing module.

The third detection module is configured to detect an exceptional Gx session of user equipment. The Gx session is carried on a link between a PGW and a PCRF.

The first retrieval module is configured to retrieve a most recent PCC rule for the Gx session which is recorded in a local data storage.

The second processing module is configured to process a data traffic service of the user equipment according to the most recent PCC rule.

By using these above, when a Gx session exception occurs, the PCC rule most recently used by the user equipment is used for charging, so that the user is continuously provided with its value-added data service. This avoids additional expenditure of the user.

Alternatively, after the PGW retrieves the most recent PCC rule for the Gx session which is recorded in the local data storage, the following steps are included.

After it is determined that the user equipment has consumed all data traffic, the PGW reports a CCR message to an AF through the PCRF according to the PCC rule.

If a normal response returned by the PCRF is received, the data traffic service corresponding to the Gx session is resumed.

Or, if a timeout error code or an AF timeout error code returned by the PCRF is received, the data traffic service is continued to be processed according to the PCC rule, and an emergency call detail record is generated.

According to another embodiment of the present disclosure, a device for processing a Gx session exceptions is also provided. The device includes a fourth detection module, a first sending module, a first receiving module, and a third processing module.

The fourth detection module is configured to detect an exceptional Gx session of user equipment. The Gx session is carried on the link between a PGW and a PCRF.

The first sending module is configured to send to an AF a log file, in which the user equipment of which the Gx session is in an exceptional state is written after a preset condition is met.

The first receiving module is configured to receive a receipt file resulted from the AF processing the log file.

The third processing module is configured to process the data traffic service of the user equipment when the receipt file indicates that a state of the user equipment is normal, and generate an emergency call detail record, or configured to terminate processing of the data traffic service of the user equipment when the receipt file indicates that a state of the user equipment is exceptional.

In the above technical solution, the PGW can interact with the AF in time to obtain the latest state of the user equipment, and determines a deduction method based on the state of the user equipment, which avoids the problem that the PGW uses an emergency handling mode for a long time but cannot deduct fees from the user.

Alternatively, the preset condition includes at least one of the following: a preset time is exceeded; and a number of times of the Gx session request being exceptional exceeds a threshold.

Alternatively, after terminating the processing of the data traffic service of the user equipment when the receipt file indicates that a state of the user equipment is exceptional, the following steps are included: receiving, by the PGW, a message about the user equipment applying for traffic, and determining, by the PGW, that a basic charging rule is set as a charging rule for the user equipment.

According to another embodiment of the present disclosure, a device for processing a Gx session exception is also provided. The device includes a first acquiring module and a fee deduction module.

The first acquiring module is configured to acquire an emergency call detail record generated by a PGW when a Gx session exception is determined. The emergency call detail record is generated by the PGW according to a PCC rule.

The fee deduction module is configured to perform fee deduction from the user equipment corresponding to the Gx session according to the emergency call detail record.

Using these above, when the Gx session exception occurs, it is realized that the PGW is providing an emergency service, at the same time, the AF is performing fee deduction according to the emergency call detail record.

Alternatively, when the Gx session exception is determined, the AF receives a log file sent by the PGW The log file keeps a record of the user equipment of which the Gx session is in an exceptional state. A condition of a data traffic package of the user equipment is confirmed. The condition is marked as a normal condition when it is confirmed that there is a remaining traffic package of the user equipment, and the condition is marked as an exceptional condition when it is confirmed that there is no remaining traffic package of the user equipment. The condition of the data traffic package is written to a receipt file and fed to the PGW.

It should be noted that each of the above modules may be implemented by software or hardware. In case of the latter, the modules may be implemented in the following way, but not limited to the following way: the above modules are all located in a same processor; or, the above modules are located in any combination thereof in different processors.

### Embodiment 3

An embodiment of the present disclosure also provides a storage medium. Alternatively, in this embodiment, the foregoing storage medium may be configured to store program codes configured to perform the following steps.

In step S 1, when a PGW detects an exception of a Gx session, a preset timer is activated. The Gx session is carried on a link between the PGW and a PCRF.

In step S2, after the timer expires, a data traffic service of user equipment corresponding to the Gx session is resumed if it is determined that the link is normal.

Alternatively, in this embodiment, the foregoing storage medium may include, but is not limited to various media that can store program codes, such as a U disk, a read-only memory (ROM), a random access memory (RAM), a mobile hard disk, a diskette, an optical disk, etc.

An embodiment of the present disclosure also provides an electronic device, including a memory and a processor. The memory stores a computer program, and the processor is configured to execute the computer program to implement the steps in any of the above method embodiments.

Alternatively, the above electronic device may further include a transmission device and an input-output device. The transmission device is connected with the aforementioned processor, and the input-output device is connected with the aforementioned processor.

Alternatively, in this embodiment, the foregoing processor may be configured to execute a computer program to implement the following steps.

In step S 1, when a PGW detects an exception of a Gx session, a preset timer is activated. The Gx session is carried on a link between the PGW and a PCRF.

In step S2, after the timer expires, a data traffic service of user equipment corresponding to the Gx session is resumed if it is determined that the link is normal.

Alternatively, for specific examples of this embodiment, reference may be made to the examples described in the above embodiments and optional implementations, which are not described herein again in this embodiment.

Obviously, those skilled in the art should appreciate that the above modules or steps of the present disclosure may be implemented by a general computing device, and they may be collectively provided on a single computing device, or distributed on a network composed of multiple computing devices. Alternatively, they may be implemented with program codes executable by a computing device, and therefore they may be stored in a storage device for execution by a computing device. In some cases, the steps shown or described may be implemented in an order different from the order described herein, or they can be fabricated into individual integrated circuit modules, or a plurality of the modules or steps may be fabricated into individual integrated circuit modules for implementation. In this way, the present disclosure is not limited to any specific hardware and software combination.

The foregoing described is only preferred embodiments of the present disclosure and is not used to limit the present disclosure.

### Industrial applicability

According to the above technical solutions provided by the present disclosure, when the PGW detects an exception of a Gx session, the preset timer is activated, the Gx session being carried on a link between the PGW and the PCRF; and after the timer expires, the data traffic service of user equipment corresponding to the Gx session is resumed if it is determined that the link is normal. In this way, the problem in related technologies that a data traffic service cannot be automatically resumed after a Gx session exception is solved, and automatic resuming of the data traffic service can be implemented after the timer expires.

## Claims

1. A method for processing a Gx session exception, comprising:
activating (S202) a preset timer when a public data network gateway (14), PGW, detects an exception of a Gx session due to that a link between the PGW (14) and a policy and charging rules function unit (12), PCRF, is in an exceptional state,
wherein the Gx session is carried on the link between the PGW (14) and the PCRF (12); and
resuming (S204), after the timer expires, a data traffic service of a user equipment corresponding to the Gx session if it is determined that the link is normal,
**characterized in that**:
when the PGW (14) detects the exception of the Gx session, the method further comprises: before the timer expires, prohibiting the data traffic service of the user equipment from degrading and continuing to process the data traffic service of the user equipment according to a policy control and charging, PCC, rule, and generating an emergency call detail record of the user equipment based on the PCC rule by the PGW (14).

2. The method according to claim 1,
wherein, after the timer expires, the method further comprises:
continuing to process the data traffic service of the user equipment according to the PCC rule and generating the emergency call detail record of the user equipment if it is determined that the link between the PGW and the PCRF is in an exceptional state.

3. The method according to claim 1, wherein when the PGW detects the exception of the Gx session, the method further comprises:
before the timer expires, retrieving, by the PGW (14), a most recent PCC rule for the Gx session which is recorded in a local data storage; and
processing the data traffic service of the user equipment corresponding to the Gx session according to the most recent PCC rule,
wherein, after the timer expires, the method further comprises:
processing the data traffic service of the user equipment corresponding to the Gx session according to the most recent PCC rule if it is determined that the link between the PGW (14) and the PCRF (12) is in an exceptional state,
wherein after retrieving, by the PGW, the most recent PCC rule for the Gx session which is recorded in the local data storage, the method further comprises:
reporting, by the PGW (14) and through the PCRF (12), a credit control request, CCR, message to an application function unit (13), AF, according to the PCC rule after it is determined that the user equipment has consumed all data traffic; and
resuming the data traffic service corresponding to the Gx session if a normal response returned by the PCRF (12) is received, or continuing to process the data traffic service according to the PCC rule and generating an emergency call detail record if a timeout error code or an AF timeout error code returned by the PCRF (12) is received.

4. The method according to claim 1, 2 or 3, wherein when the PGW (14) detects the exception of the Gx session, the method further comprises:
before the timer expires, writing by the PGW (14), the user equipment of which the Gx session is in an exceptional state to a log file if a preset condition is met, and sending the log file to an application function unit (13), AF;
receiving a receipt file resulted from the AF (13) processing the log file; and
processing the data traffic service of the user equipment when the receipt file indicates that a state of the user equipment is normal, and generating an emergency call detail record; or, terminating processing of the data traffic service of the user equipment when the receipt file indicates that a state of the user equipment is exceptional,
wherein, after the timer expires, the method further comprises:
writing, by the PGW (14), the user equipment of which the Gx session is in an exceptional state to a log file if it is determined that the link between the PGW (14) and the PCRF (12) is normal,
wherein the preset condition comprises at least one of:
a preset time is exceeded; and
a number of times of a request for the Gx session being in an exceptional state exceeds a threshold.

5. The method according to claim 4, wherein after terminating processing of the data traffic service of the user equipment when the receipt file indicates that the state of the user equipment is exceptional, the method further comprises:
receiving, by the PGW (14), a message about the user equipment applying for traffic; and
determining, by the PGW (14), that a basic charging rule is set as a charging rule for the user equipment.

6. The method according to claim 1, wherein the PGW (14) detects the exception of the Gx session by at least one of the following approaches:
a request for the Gx session times out; and
a message fed back by the PCRF (12) and indicating that an application function unit (13), AF, times out is received.

7. A device for processing a Gx session exception, comprising:
a first detection module, configured to activate a preset timer when an exception of a Gx session due to that a link between a public data network gateway (14), PGW and a policy and charging rules function unit (12), PCRF, is in an exceptional state, is detected, wherein the Gx session is carried on the link between the public data network gateway (14), PGW, and the policy and charging rules function unit (12), PCRF; and
a first resuming module, configured to resume, after the timer expires, a data traffic service of a user equipment corresponding to the Gx session if it is determined that the link is normal,
**characterized in that**:
when the PGW (14) detects the exception of the Gx session, the PGW (14) is configured to: before the timer expires, prohibit the data traffic service of the user equipment from degrading and continue to process the data traffic service of the user equipment according to a policy control and charging, PCC, rule, and generate an emergency call detail record of the user equipment based on the PCC rule by the PGW (14).

8. A storage medium in which a computer program is stored, **characterized in that** the computer program comprises instructions configured to be executable to implement the method according to any one of claims 1 to 6.

## Patentansprüche

1. Verfahren zum Verarbeiten einer Gx-Sitzungs-Ausnahme, umfassend:
Aktivieren (S202) eines voreingestellten Zeitgebers, wenn ein öffentliches Datennetz-Gateway (14), PGW, eine Ausnahme einer Gx-Sitzung erkennt, die darauf zurückzuführen ist, dass eine Verbindung zwischen dem PGW (14) und einer Richtlinien- und Gebührenberechnungsregel-Funktionseinheit (12), PCRF, in einem Ausnahmezustand ist,
wobei die Gx-Sitzung auf der Verbindung zwischen dem PGW (14) und der PCRF (12) übertragen wird; und
Wiederaufnehmen (S204) eines Datenverkehrsdienstes eines Benutzergeräts, welcher der Gx-Sitzung entspricht, nachdem der Zeitgeber abgelaufen ist, wenn festgestellt wird, dass die Verbindung normal ist,
**dadurch gekennzeichnet, dass:**
wenn das PGW (14) die Ausnahme der Gx-Sitzung erkennt, das Verfahren ferner umfasst: vor Ablauf des Zeitgebers, Verhindern einer Verschlechterung des Datenverkehrsdienstes des Benutzergeräts und Fortsetzen der Verarbeitung des Datenverkehrsdienstes des Benutzergeräts gemäß einer Regel zur Richtlinienkontrolle und Gebührenberechnung, PCC, und Erzeugen eines Notrufdetaildatensatzes des Benutzergeräts auf der Grundlage der PCC-Regel durch das PGW (14).

2. Verfahren nach Anspruch 1,
wobei das Verfahren nach Ablauf des Zeitgebers ferner umfasst:
Fortsetzen der Verarbeitung des Datenverkehrsdienstes des Benutzergeräts gemäß der PCC-Regel und Erzeugen des Notrufdetaildatensatzes des Benutzergeräts, wenn festgestellt wird, dass sich die Verbindung zwischen dem PGW und der PCRF in einem Ausnahmezustand befindet.

3. Verfahren nach Anspruch 1, wobei, wenn das PGW die Ausnahme der Gx-Sitzung erkennt, das Verfahren ferner umfasst:
vor Ablauf des Zeitgebers, Abrufen einer jüngsten PCC-Regel für die Gx-Sitzung, die in einem lokalen Datenspeicher aufgezeichnet ist, durch das PGW (14) und
Verarbeiten des Datenverkehrsdienstes des Benutzergeräts, welcher der Gx-Sitzung entspricht, gemäß der jüngsten PCC-Regel,
wobei das Verfahren nach Ablauf des Zeitgebers ferner umfasst:
Verarbeiten des Datenverkehrsdienstes des Benutzergeräts, welcher der Gx-Sitzung entspricht, gemäß der jüngsten PCC-Regel, wenn festgestellt wird, dass sich die Verbindung zwischen dem PGW (14) und der PCRF (12) in einem Ausnahmezustand befindet,
wobei nach dem Abrufen der jüngsten PCC-Regel für die Gx-Sitzung, die in dem lokalen Datenspeicher aufgezeichnet ist, durch das PGW das Verfahren ferner umfasst:
Berichten, durch das PGW (14) und durch die PCRF (12), einer Kreditkontrollanforderungsnachricht, CCR-Nachricht, an eine Anwendungsfunktionseinheit (13), AF, gemäß der PCC-Regel, nachdem festgestellt wurde, dass das Benutzergerät den gesamten Datenverkehr verbraucht hat; und
Wiederaufnehmen des Datenverkehrsdienstes, welcher der Gx-Sitzung entspricht, wenn eine von der PCRF (12) zurückgesendete normale Antwort empfangen wird, oder Fortsetzen der Verarbeitung des Datenverkehrsdienstes gemäß der PCC-Regel und Erzeugen eines Notrufdetaildatensatzes, wenn ein von der PCRF (12) zurückgesendeter Timeout-Fehlercode oder AF-Timeout-Fehlercode empfangen wird.

4. Verfahren nach Anspruch 1, 2 oder 3, wobei, wenn das PGW (14) die Ausnahme der Gx-Sitzung erkennt, das Verfahren ferner umfasst:
vor Ablauf des Zeitgebers, Schreiben des Benutzergeräts, dessen Gx-Sitzung sich in einem Ausnahmezustand befindet, durch das PGW (14) in eine Protokolldatei, wenn eine voreingestellte Bedingung erfüllt ist, und Senden der Protokolldatei an eine Anwendungsfunktionseinheit (13), AF;
Empfangen einer Empfangsdatei, die aus dem Verarbeiten der Protokolldatei durch die AF (13) resultiert; und
Verarbeiten des Datenverkehrsdienstes des Benutzergeräts, wenn die Empfangsdatei angibt, dass ein Zustand des Benutzergeräts normal ist, und Erzeugen eines Notrufdetaildatensatzes oder Beenden des Verarbeitens des Datenverkehrsdienstes des Benutzergeräts, wenn die Empfangsdatei angibt, dass ein Zustand des Benutzergeräts außergewöhnlich ist,
wobei das Verfahren nach Ablauf des Zeitgebers ferner umfasst:
Schreiben des Benutzergeräts, dessen Gx-Sitzung sich in einem Ausnahmezustand befindet, durch das PGW (14) in eine Protokolldatei, wenn festgestellt wird, dass die Verbindung zwischen dem PGW (14) und der PCRF (12) normal ist,
wobei die voreingestellte Bedingung mindestens eines umfasst von:
eine voreingestellte Zeit wird überschritten und
eine Anzahl von Malen, in denen sich eine Anforderung für die Gx-Sitzung in einem Ausnahmezustand befindet, überschreitet einen Schwellenwert.

5. Verfahren nach Anspruch 4, wobei nach dem Beenden des Verarbeitens des Datenverkehrsdienstes des Benutzergeräts, wenn die Empfangsdatei angibt, dass der Zustand des Benutzergeräts außergewöhnlich ist, das Verfahren ferner umfasst:
Empfangen einer Nachricht durch das PGW (14) über das Benutzergerät, das Verkehr anfordert; und
Bestimmen, durch das PGW (14), dass eine grundlegende Gebührenregel als Gebührenregel für das Benutzergerät eingestellt ist.

6. Verfahren nach Anspruch 1, wobei das PGW (14) die Ausnahme der Gx-Sitzung durch mindestens einen der folgenden Ansätze erkennt:
bei einer Anforderung für die Gx-Sitzung tritt eine Zeitüberschreitung auf und
eine von der PCRF (12) zurückgesendete Nachricht, die angibt, dass bei einer Anwendungsfunktionseinheit (13), AF, eine Zeitüberschreitung auftritt, wird empfangen.

7. Vorrichtung zum Verarbeiten einer Gx-Sitzungs-Ausnahme, umfassend:
ein erstes Erkennungsmodul, das so konfiguriert ist, dass es einen voreingestellten Zeitgeber aktiviert, wenn eine Ausnahme einer Gx-Sitzung erkannt wird, die darauf zurückzuführen ist, dass eine Verbindung zwischen einem öffentlichen Datennetz-Gateway (14), PGW, und einer Richtlinien- und Gebührenberechnungsregel-Funktionseinheit (12), PCRF, in einem Ausnahmezustand ist, wobei die Gx-Sitzung auf der Verbindung zwischen dem öffentlichen Datennetz-Gateway (14), PGW, und der Richtlinien- und Gebührenberechnungsregel-Funktionseinheit (12), PCRF, übertragen wird; und
ein erstes Wiederaufnahmemodul, das so konfiguriert ist, dass es einen Datenverkehrsdienst eines Benutzergeräts, welcher der Gx-Sitzung entspricht, nachdem der Zeitgeber abgelaufen ist, wiederaufnimmt, wenn festgestellt wird, dass die Verbindung normal ist,
**dadurch gekennzeichnet, dass:**
wenn das PGW (14) die Ausnahme der Gx-Sitzung erkennt, das PGW (14) konfiguriert ist zum: vor Ablauf des Zeitgebers, Verhindern einer Verschlechterung des Datenverkehrsdienstes des Benutzergeräts und Fortsetzen der Verarbeitung des Datenverkehrsdienstes des Benutzergeräts gemäß einer Regel zur Richtlinienkontrolle und Gebührenberechnung, PCC, und Erzeugen eines Notrufdetaildatensatzes des Benutzergeräts auf der Grundlage der PCC-Regel durch das PGW (14).

8. Speicherungsmedium, in dem ein Computerprogramm gespeichert ist, **dadurch gekennzeichnet, dass** das Computerprogramm Anweisungen umfasst, die so konfiguriert sind, dass sie ausgeführt werden können, um das Verfahren nach einem der Ansprüche 1 bis 6 zu implementieren.

## Revendications

1. Procédé de traitement d'une exception de session Gx, comprenant :
l'activation (S202) d'un temporisateur préréglé lorsqu'une passerelle de réseau public de données (14), PGW, détecte une exception de session Gx due au fait qu'une liaison entre la PGW (14) et une unité de fonction de règles de politique et de facturation (12), PCRF, est dans un état exceptionnel,
dans lequel la session Gx est portée sur la liaison entre la PGW (14) et la PCRF (12) ; et
la reprise (S204), lorsque le temporisateur est arrivé à expiration, d'un service de trafic de données d'un équipement utilisateur correspondant à la session Gx si la liaison est déterminée comme étant normale,
**caractérisé en ce que** :
lorsque la PGW (14) détecte l'exception de la session Gx, le procédé comprend en outre : avant que le temporisateur n'arrive à expiration, l'interdiction de la dégradation du service de trafic de données de l'équipement utilisateur et la poursuite du traitement du service de trafic de données de l'équipement utilisateur selon une règle de contrôle et de facturation de la politique, PCC, et la génération d'un enregistrement détaillé de l'appel d'urgence de l'équipement utilisateur en fonction de la règle PCC par la PGW (14).

2. Procédé selon la revendication 1,
dans lequel, lorsque le temporisateur est arrivé à expiration, le procédé comprend en outre :
la poursuite du traitement du service de trafic de données de l'équipement utilisateur selon la règle PCC et la génération de l'enregistrement détaillé de l'appel d'urgence de l'équipement utilisateur si la liaison entre la PGW et la PCRF est déterminée comme étant dans un état exceptionnel.

3. Procédé selon la revendication 1, dans lequel, lorsque la PGW détecte l'exception de la session Gx, le procédé comprend en outre :
avant que le temporisateur n'arrive à expiration, la récupération par la PGW (14) de la règle PCC la plus récente pour la session Gx qui est enregistrée dans une mémoire de données locale ; et
le traitement du service de trafic de données de l'équipement utilisateur correspondant à la session Gx selon la règle PCC la plus récente,
dans lequel, lorsque le temporisateur est arrivé à expiration, le procédé comprend en outre :
le traitement du service de trafic de données de l'équipement utilisateur correspondant à la session Gx selon la règle PCC la plus récente si la liaison entre la PGW (14) et la PCRF (12) est déterminée comme étant dans un état exceptionnel,
dans lequel, après la récupération, par la PGW, de la règle PCC la plus récente pour la session Gx qui est enregistrée dans le stockage de données local, le procédé comprend en outre :
la notification, par la PGW (14) et par l'intermédiaire de la PCRF (12), d'un message de demande de contrôle de crédit (CCR) à une unité de fonction d'application (13), AF, selon la règle PCC, après qu'il a été déterminé que l'équipement utilisateur a consommé l'ensemble du trafic de données ; et
la reprise du service de trafic de données correspondant à la session Gx si une réponse normale renvoyée par la PCRF (12) est reçue, ou la poursuite du traitement du service de trafic de données selon la règle PCC et la génération d'un enregistrement détaillé d'appel d'urgence si un code d'erreur de dépassement de délai ou un code d'erreur de dépassement de délai AF renvoyé par la PCRF (12) est reçu.

4. Procédé selon la revendication 1, 2 ou 3, dans lequel, lorsque la PGW (14) détecte l'exception de la session Gx, le procédé comprend en outre :
avant que le temporisateur n'arrive à expiration, l'écriture par la PGW (14) de l'équipement utilisateur dont la session Gx est dans un état exceptionnel dans un fichier journal si une condition prédéfinie est remplie, et l'envoi du fichier journal à une unité de fonction d'application (13), AF ;
la réception d'un fichier de réception résultant du traitement du fichier journal par l'AF (13) ; et
le traitement du service de trafic de données de l'équipement utilisateur lorsque le fichier de réception indique que l'état de l'équipement utilisateur est normal, et la génération d'un enregistrement détaillé de l'appel d'urgence ; ou l'arrêt du traitement du service de trafic de données de l'équipement utilisateur lorsque le fichier de réception indique qu'un état de l'équipement utilisateur est exceptionnel,
dans lequel, lorsque le temporisateur est arrivé à expiration, le procédé comprend en outre :
l'écriture, par la PGW (14), de l'équipement utilisateur dont la session Gx est dans un état exceptionnel dans un fichier journal si la liaison entre la PGW (14) et la PCRF (12) est déterminée comme étant normale,
dans lequel la condition prédéfinie comprend au moins l'un des éléments suivants :
un temps prédéfini est dépassé ; et
le nombre de fois où une demande de session Gx se trouve dans un état exceptionnel dépasse un seuil.

5. Procédé selon la revendication 4, dans lequel, après l'arrêt du traitement du service de trafic de données de l'équipement utilisateur lorsque le fichier de réception indique que l'état de l'équipement utilisateur est exceptionnel, le procédé comprend en outre :
la réception, par la PGW (14), d'un message concernant l'équipement utilisateur demandant du trafic ; et
la détermination, par la PGW (14), du fait qu'une règle de tarification de base est définie comme règle de tarification pour l'équipement utilisateur.

6. Procédé selon la revendication 1, dans lequel la PGW (14) détecte l'exception de la session Gx par au moins l'une des approches suivantes :
un délai de demande de session Gx est dépassé ; et
un message renvoyé par la PCRF (12) et indiquant qu'une unité de fonction d'application (13), AF, est en panne est reçu.

7. Dispositif de traitement d'une exception de session Gx, comprenant :
un premier module de détection, configuré pour activer un temporisateur préréglé en cas de détection d'une exception de session Gx due au fait qu'une liaison entre une passerelle de réseau public de données (14), PGW, et une unité de fonction de règles de politique et de tarification (12), PCRF, est dans un état exceptionnel, dans lequel la session Gx est portée sur la liaison entre la passerelle de réseau public de données (14), PGW, et l'unité de fonction de règles de politique et de tarification (12), PCRF ; et
un premier module de reprise, configuré pour reprendre, lorsque le temporisateur est arrivé à expiration, un service de trafic de données d'un équipement utilisateur correspondant à la session Gx si la liaison est déterminée comme étant normale, **caractérisé en ce que** :
lorsque la PGW (14) détecte l'exception de la session Gx, la PGW (14) est configurée pour : avant que le temporisateur n'arrive à expiration, interdire la dégradation du service de trafic de données de l'équipement utilisateur et continuer le traitement du service de trafic de données de l'équipement utilisateur selon une règle de contrôle et de facturation de la politique, PCC, et générer un enregistrement détaillé de l'appel d'urgence de l'équipement utilisateur en fonction de la règle PCC par la PGW (14).

8. Support de stockage dans lequel un programme informatique est stocké, **caractérisé en ce que** le programme informatique comprend des instructions configurées pour être exécutables, pour mettre en oeuvre le procédé selon l'une quelconque des revendications 1 à 6.
